# EUROPEAN PATENT APPLICATION

(11) **EP 0 714 932 A2**
(43) Date of publication of application: **05.06.1996**
(21) Application number: 94120613.8
(22) Date of filing: 23.12.1994
(51) Int. Cl.: C08K 5/523, C08L 69/00

(54) **Flame proof polycarbonate composition**

(30) Priority: 01.12.1994 KR 9432417
(71) Applicant: CHEIL INDUSTRIES INC., Taegu 702-050 (KR)
(72) Inventor: Lee, Kyu-cheol, Suwon, Kyungki-do (KR); Yang, Sam-joo, Suwon, Kyungki-do (KR); Jang, Bok-nam, Kyungki-do (KR)
(74) Representative: Hering, Hartmut, Dipl.-Ing.

(57) **Abstract**

The flameproof thermoplastic resin compositions comprise a base resin of polycarbonate or polycarbonate including ABS, a phosphorous compound of a blend of triarylphosphates and oligomeric triarylphosphates or of a synthetic oligomeric triarylphosphates and a fluoric resin.

The triarylphosphate and oligomeric triarylphosphate are represented as the formula(I) 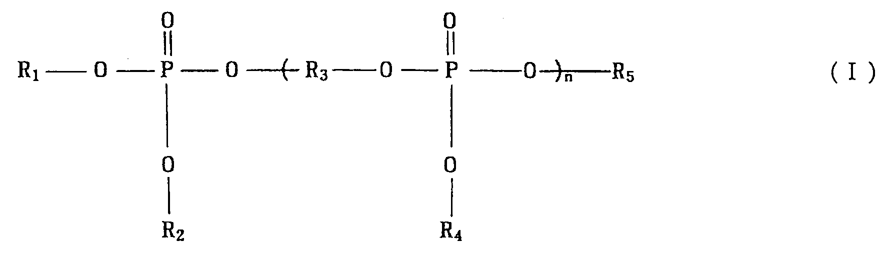
wherein R₁, R₂, R₃, R₄ and R₅ independently of one another are C₆-C₂₀ aryl or alkyl-substituted C₆-C₂₀ aryl and n is 0 to 5. In the phosphorous blend of the triarylphosphate and oligomeric triarylphosphate, n is 0.3 to 0.8. Also, in the synthetic oligomeric triarylphosphate according to this invention, n is 0.3 to 0.8.

## Description

The present invention relates to flameproof thermoplastic resin compositions, and specifically to those for molding, based on a polycarbonate resin or a polycarbonate resin containing ABS(acrylonitrile/butadiene/styrene) resin, containing a phosphorous compound and a fluoric resin. The ABS resin as a component of the base resin is a graft-acrylonitrile/butadiene/styrene(g-ABS) copolymer or a styrene/acrylonitrile(SAN) copolymer. The phosphorous compound used as flame-retardant is a phosphorous blend of triarylphoshate and oligomeric triarylphospate, or synthetic oligomeric triarylphosphate. The thermoplastic resin compositions of the present invention may further contain such additives as inorganic reagents, heat stabilizers, dyes, or pigments in fractions as needed.

A polycarbonate molding composition is widely used for parts of automobiles and electrical appliances, which has a good combination of transparency, high impact strength and heat resistance. However the polycarbonate molding composition does not have a good processability during a molding process. Accordingly other resins are used with the polycarbonate resin. For example, a molding composition comprising a polycarbonate resin and a styrenic resin has a good processability as well as a high notched impact strength.

Furthermore, the polycarbonate molding composition used for housing materials of home appliances and computers should be flame resistant for the sake of prevention of fire. For this purpose, halogen or antimony containing compound has been used to render flame retardency to the thermoplastic molding composition. The halogen or antimony containing compound, however, results in the corrosion of the mold itself by the hydrogen halide gases released during the molding process and is fatally harmful due to the toxic gases liberated in the case of fire.

The use of a phosphorous compound and a fluoric resin to render flame retardency to a polycarbonate/ABS resin composition, as disclosed in Japanese Patent Laid Open No. 62-4747, prevents the dripping of flaming particles during combustion. However the resin composition results in unsatisfactory flame retardency and surface segregation of the flame retardants during the molding process, called "juicing", degrading the physical properties of the resin composition. In order to improve the juicing phenomenon, an olygomeric phosphate is used in the preparation of a polycarbonate/ABS resin composition, as disclosed in European Patent No. 363,608. This resin composition exhibits a good heat resistance, but fails to solve the juicing problem completely, and requires a complicated mixing apparatus in an extruder because the oligomeric phosphate is liquid at room temperature.

U.S. Patent No. 4,692,488 discloses a thermoplastic molding composition comprising a hologen-free aromatic polycarbonate, a hologen-free thermoplastic copolymer of styrene and acrylonitrile, a hologen-free phosphorous compound, a tetrafluoroethylene polymer and graft polymers of ABS. U.S. Patent No. 5,204,394 discloses a polymer mixture comprising an aromatic polycarbonate, a styrene-containing copolymer and/or styrene-containing graft copolymer and an oligomeric phosphate or a blend of oligomeric phosphates as flame retardant.

In the U.S. Patents mentioned above, representative examples of the phosphorous compound are triarylphosphates and oligomeric triarylphosphates. In the process of using triarylphosphates, a juicing phenomenon occurs during the process because the triarylphosphates forms laminae on the surface to which a strong stress is applied, the heat resistance of the resin composition deteriorates, and inferior processability occurs due to difficulties in blending and feeding. On the other hand, in the process of using oligomeric triarylphosphates, a juicing phonomenon does not occur, but the appearance of molded articles is not good with color stripes.

Accordingly the present inventors developed a new thermoplastic resin composition with a good combination of heat resistance, no juicing phonomenon, processability, appearance and flame retardency, by using a phosphorous blend of triarylphosphate and oligomeric triarylphosphate, or synthetic oligomeric triarlphosphate, and fluoric resin.

An object of the present invention is to provide a flameproof thermpolastic resin composition which comprises a basic resin of polycarbonate and ABS, a phosphorous blend of triarylphosphate and oligomeric triarylphosphate, and a fluoric resin.

Another object of the invention is to provide a flameproof thermoplastic resin compostion which comprises a basic resin of polycarbonate and ABS, a synthetic oligomeric triarylphosphate and a fluoric resin.

Further object of the invention is to provide a flameproof thermoplastic resin composition with a good combination of heat resistance, no juicing phenomenon, processability and appearance, which comprises a basic resin of polycarbonate and ABS, a phosphorous blend of triarylphosphate and oligomeric triarylphosphate, and a fluoric resin.

Further object of the invention is to provide a flameproof thermoplastic resin composition with a good combination of heat resistance, no juicing phenomenon, processability and appearance, which comprises a basic resin of polycarbonate and ABS, a phosphorous blend of triarylphosphate and oligomeric triarylphosphate, and a fluoric resin.

The present invention relates to flameproof thermoplastic resin compositions comprising (A) a basic resin consisting of (a₁) 70 to 100 % by weight of a thermoplastic, halogen-free polycarbonate (a₂) 30 to 0 % by weight of an ABS consisting of (a₂₁) 30 to 100 % by weight a of g-ABS copolymer with a graft index of 40 to 90 %, which is copolymerized 30 to 70 % by weight of rubber with a glass transition temperature less than 10°C, 30 to 70 % by weight of at least one selected from a group of styrene, α-substitued styrene and nucleus-substitued styrene, and 15 to 30 % by weight of at least one selected from a group of methylmethacrylate, N-substituted maleimide and acrylonitrile, and (a₂₂) 70 to 0 % by weight of a SAN copolymer which is copolymerized 50 to 80 % by weight of at least one selected from a group of sytrene, α-substitued styrene and nucleus-substituted styrene and 50 to 20 % by weight at least one selected from a group of methylmethacrylate, N-substituted maleimide and acrylonitrile, (B) 6 to 20 parts by weight, per 100 parts by weight of the base resin(A), of a phosphorous blend of triarylphosphates and oligomeric triarylphosphates, or of a synthetic oligomeric triarylphosphate, and (C) 0.1 to 2.0 parts by weight, per 100 parts by weight of the base resin(A), of a fluoric resin.

The triarylphosphate and oligomeric triarylphosphate are represented as the formula(I) 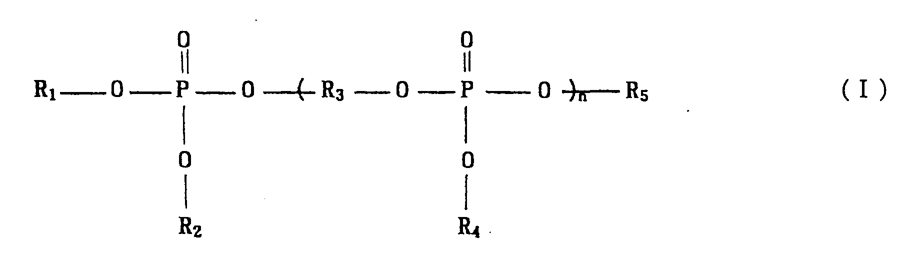
wherein R₁, R₂, R₃, R₄ and R₅ independently of one another are C₆-C₂₀ aryl or alkyl-substituted C₆-C₂₀ aryl and n is 0 to 5. In the phosphorous blend of the triarylphosphate and oligomeric triarylphosphate, n is 0.3 to 0.8. Also, in the synthetic oligomeric triarylphosphate according to this invention, n is 0.3 to 0.8.

The flameproof thermoplastic resin compositions according to the invention comprises a basic resin(A), a phosphorous compound(B) and a fluoric resin(C). The detailed descriptions of each component are as follows:

### (A) Basic Resin

The basic resin used in this invention is a thermoplastic, halogen-free polycarbonate or a thermoplastic, halogen-free polycarbonate containing an ABS. More particularly, the basic resin consists of 70 to 100 % by weight of a thermoplastic, hologen-free polycarbonate and 30 to 0 % by weight of an ABS.

According to substituted groups, there are aromatic polycarbonates, aliphatic polycarbonates, and aromatic/aliphatic polycarbonates, and a polycarbonate or a blend of the plycarbonates may be used in this invention. Aromatic polycarbonates are preferable, and aromatic polycarbonates synthesized from 2,2'-bis(4-hydroxylpheny)propane, called "Bisphenol A", are more preferable.

The ABS resin is a graft-acrylonitrile/butadiene/styrene (g-ABS) copolymer or a g-ABS copolymer containing a styrene/acrylonitrile(SAN) copolymer. More particularly, the ABS resin consists of 30 to 100 % by weight of a g-ABS copolymer and 70 to 0 % by weight of a SAN copolymer. The g-ABS copolymer is prepared by copolymerisation of 30 to 70 % by weight of rubber with a glass transition temperature less than 10 °C, 30 to 70 % by weight of at least one selected from a group of styrene, α-substituted styrene and nucleus-substituted styrene, and 15 to 30 % by weight of at least one selected from a group of methylmethacrylate, N-substituted maleimide and acrylonitrile.

The rubbers used to prepare the g-ABS are acryl rubber, butadiene rubber, ethylene/propylene rubber, styrene/butadiene rubber and acrylonitrile/butadiene rubber, of which acryl rubber and butadiene rubber are more preferable.

The SAN copolymer is prepared by copolymerization of 50 to 80 % by weight of at least one selected from a group of styrene, α-substitued styrene and nucleus-substitued styrene and 50 to 20 % by weight at least one selected from a group of methylemethacrylate, N-substituted maleimide and acrylonitrile.

The g-ABS copolymer or the copolymer blend of a g-ABS copolymer and a SAN copolymer is blended in an amount up to 30 % by weight with a thermoplastic, halogen-free polycarbonate. The representative examples of the g-ABS copolymer or the copolymer blend of a g-ABS copolymer and a SAN copolymer are acrylonitrile/butadiene/styrene(ABS) copolymer, methylmethacrylate/butadiene/styrene(MBS) copolymer, acrylate/styrene/acrylonitrile(ASA) copolymer, and acrylonitrile/ethylacrylate/styrene(AES) copolymer.

### (B) Phosphorous Compound

The phosphorous compound used in this invention is a phosphorous blend of triarylphosphates and oligomeric triarylphosphates, or a synthetic oligomeric triarylphosphate.

The triarylphosphates, oligomeric triarylphosphates and synthetic oligomeric triarylphosphates are represented as the formula(I) 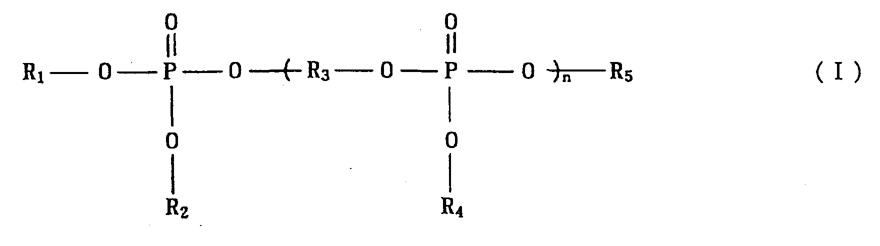
wherein R₁, R₂, R₃, R₄ and R₅ independently of one another are C₆-C₂₀ aryl or alkyl-substituted C₆-C₂₀ aryl and n is 0 to 5.

The triarylphosphates are phosphorous compounds where n is 0 in the formular(I). The examples of the triarylphosphates are triphenylphosphate, tri(2.6-dimethylphenyl)phosphate, tri(4-methylphenyl)phosphate, tricresylphosphate, diphenyl 2-ethylcresylphosphate, diphenylcresylphosphate, tri(isopropylphenyl)phosphate, tricylenylphosphate, xylenyldiphenylphosphate, etc. However all the triarylphosphates described above are not used in this invention. For the purpose of the invention the triarylphosphates should have a melting point of 45 °C or above and be in a state of solid at room temperature. Therefore triphenylphosphate, tri(2,6-dimethylphenyl)phosphate or tri(4-methylphenyl)phosphate may be used. The triphenylphosphate, tri(2,6-dimethylphenyl)phosphate and tri(4-methylphenyl)phosphate are represented as the formula (II), (III), and (IV). 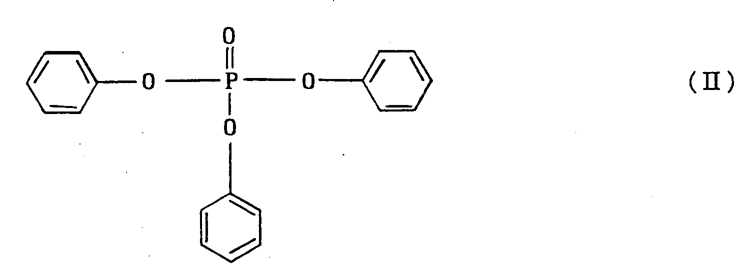 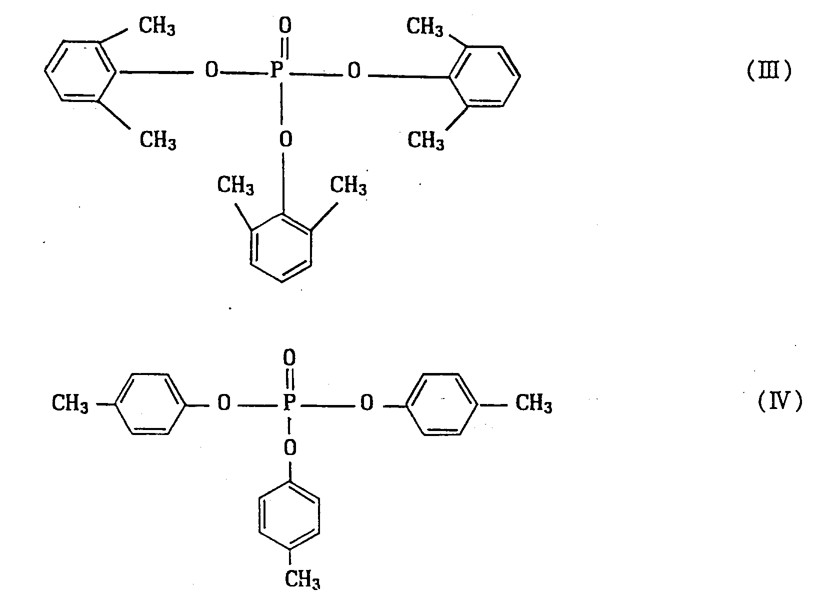
In order for the triarylphosphates to be in a state of solid at room temperature, the triarylphosphates should have a high purity of 99 % or above. As, in the purity of 99 %, the melting point of triphenylphosphate is about 47 to 50 °C, that of tri(2,6-dimethylphenyl)phosphate is about 135 to 140°C, and that of tri(4-methylphenyl)phosphate is about 70 to 80 °C, the three triarylphosphate above are in a state of solid at room temperature. The three triarylphosphates improve the processability of the resin compositions in a molding process. Use of the three triarylphosphates does not cause a juicing phenomenon. The oligomeric phosphates used in this invention are a blend of phosporous compounds where n is 1, 2, 3, 4 or 5 in the formula(I). For the purpose of the invention, the phosphorous compound consists of 30 to 60 % weight of triarylphosphates and 70 to 40 % by weight of oligomeric triarylphosphates, thereby the average of n of the phosphorous compound is 0.3 to 0.8.

Also a synthetic oligomeric triarylphosphate which may be used in this invention can be prepared, thereby the average of n of the synthetic oligomeric triarylphosphate is 0.3 to 0.8. The synthetic oligomeric triarylphosphate is parpared by adding phenol, resocinol and dichloromagnesium to benene, heating the solution, and dropping trichlorophosphinoxide in the solution. The synthetic oligomeric triarylphosphate with the average of n of 0.3 to 0.8 is extracted from the resultant solution. The phosphorous compound is used in an amount of 6 to 20 parts by weight per 100 parts by weight of the base resin.

### (C) Fluoric Resin

The flameproof thermoplastic resin compositions according to the present invention include a fluoric resin. The examples of the fluoric resin are polytetrafluoroethylene, polyvinylidene fluoride, copolymer of polytetrafluoroethylene and polyvinylidenefluoricde, copolymer of tetrafluoroethylene and fluoroalkylvinylether, and copolymer of tetrafluoroethlene and hexafluoropropylene. At least one of the fluoric resins may be used in the flameproof thermoplastic resin compositions. The fluoric resins decrease the melting flow of the flameproof thermoplastic resin during combustion by forming a fibrillar network in the resin and increase the shrinkage of the resin, thereby preventing the dripping of the melting resin during combustion. The fluoric resin may be preferably used in a form of powder so as to disperse and blend evenly in a flameproof thermoplastic resin composition. The fluoric resin may be used in a state of emulsion, but the equipment to process is complicated, even if the fluoric resin of a emulsion state has a good dispersion effect. Polytetrafluoroethylene with a particle size of 20 to 500µ is conventionally available for this invention. 0.1 to 2.0 parts by weight of the fluoric resin per 100 parts by weight of the basic resin is blended.

The flameproof thermpolastic resin compositions may further include additives such as inorganics, heat stabilizers, oxidation inhibitors, light stabilizers, pigments and/or dyes depending on specific applications. The examples of the inorganic additives are asbestos, glass fiber, talc or ceramic. The other additives are conventionally available to a skilled person in this technical field. The additives may be blended in a resin composition with an amount up to 30 parts by weight per 100 parts by weight of the base resin.

The flameproof thermoplastic resin compositions are prepared by blending a base resin, a phosphorous compound and a fluoric resin with a conventional mixer. An additive may be included in the blend. The flameproof thermoplastic resin compositions are prepared in a form of pellet by extruding the blend with a conventional extruder.

The flameproof thermoplastic resin compositions have effects that the compositions prevent toxic gases during combustion, and have a good combination of heat resistance, no juicing phenomenon, processability, appearance and flame retardency.

The invention may be better understood by reference to the following examples which are intended for the purpose of illustration and are not to be construed as in any way limiting the scope of the present invention.

### EXAMPLES

The components to prepare flameproof thermoplastic resin compositions in Examples 1 -4 and Comparative Examples 1 - 2 are as follow:

### (A) Base resins

- (a₁): Polycarbonate: L-1250W Grade of Teijin, Inc. of Japan was used.
- (a₂): ABS
(a₂₁) g-ABS
50 grams of butadiene latex in power, 36 g of styrene, 14 g of acrylonitrile, and 150 g of deionized water were blended, and 1.0 g of potassium of oleic acid, 0.4 g of cumenhydroperoxide 0.3 g of a grafting reagent were added to the blended solution. The resultant solution was kept at 75 °C for 5 hours to prepare g-ABS copolymer . To the g-ABS copolymer 0.3 g of H₂SO₄ was added to prepare g-ABS copolymer in powder.
- (a₂₂): SAN
70 g of styrene, 30 g of acrylonitrile and 120 g of deionized water were blended, and 0.2 g of azobisisobutylonitrile and 0.5 g of tricalciumphosphate were added to the blended solution. SAN copolymer was preprepared by suspension polymerization by washing, dehydrating and drying the resultant, SAN copolymer in powder was obtained.

### (B) Phosphorous Compound

Triphenylphosphate: triphenylphosphate was prepared by reacting trichlorophosphinoxide with phenol.

Tri(2,6-dimethyphenyl)phosphate: tri(2,6-dimethylophenyl) phosphate was prepared by reacting trichlorophosphinoxide with 2,6-dimethylphenol.

Tri(4-methylphenyl)phosphate: tri(4-methylphenol)phosphate was prepared by reacting trichlorophoshinoxide with 4-methylphenol.

Oligomeric triarylphosphate: CR-733S of Daihachi Co., of Japan was used.

Synthetic Oligomeric triarylphosphate: 114.7 g of phenol, 220 g of resocinol and 0.2 g of dichloromagnesium were added to 100 mℓ of benzene. The solution was heated to 70°C. 82.8 g of trichlorophosphinoxide was dropped in the solution over 2 hours at the temperature of 70°C. The resultant solution was stirred at 120°C over 3 hours not to release hydrochloride gas any more. The solvent and impurities were extracted from the solution so as to prepare synthetic oligomeric triarylphosphate in liquid at room temperature with a melting point of -25°C and with n of 0.3 to 0.8 in the formular(I).

### (C) Fluoric Resin

Teflon(trademark) 7AJ of Dupont, Inc. of U.S.A. was used.

### Examples 1-4 and Comparative Examples 1-2

The compositions of each component used in Examples 1-4 and Comparative Examples 1-2 are shown in Table 1. Triphenylphosphate only as phosphorous compound was used in Comparative Example 1. Oligomeric triarylphosphate only as phosphorous compound was used in Comparative Example 2.

In the Examples and Comparative Examples, the flameproof thermoplastic resin compositions was extruded in a form of pellet. And the resin pellets were molded into test specimens.

**TABLE 1**

| | | | Examples | | | | Comp. Ex. | |
|---|---|---|---|---|---|---|---|---|
| | | | 1 | 2 | 3 | 4 | 1 | 2 |
| (A) | (a₁) Polycarbonate | | 90 | 90 | 90 | 90 | 80 | 90 |
| | (a₂) ABS | (a₂₁) g-ABS | 5 | 5 | 5 | 5 | 5 | 10 |
| | | (A₂₂) SAN | 5 | 5 | 5 | 5 | 10 | 5 |
| (B) | Triphenylphosphate | | 3 | - | - | - | 15 | - |
| | Tri(2,6-dimethyphenyl) phosphoate | | - | 3 | - | - | - | - |
| | Tri(4-methylphenyl) phosphate | | - | - | 3 | - | - | - |
| | Oligomeric triarylphosphate | | 7 | 7 | 7 | - | - | 10 |
| | Synthetic Oligomeric triarylphosphate | | - | - | - | 9 | - | - |
| (C) Fluoric Resin | | | 1.0 | 1.0 | 1.0 | 1.0 | 1.0 | 1.0 |
| All numerals are in grams. | | | | | | | | |

For the test specimens according the Examples and Comparative Examples, flame retardency, impact strength, and heat resistance were measured, and juicing phenomenon, processability and appearance were observed. The test results are shown in Table 2.

**TABLE 2**

| | Examples | | | | Comp. Ex. | |
|---|---|---|---|---|---|---|
| | 1 | 2 | 3 | 4 | 1 | 2 |
| UL 94(1/16")¹ | V-0 | V-0 | V-0 | V-0 | V-0 | V-0 |
| Impact Strength(1/8")² | | 65 53 | 67 | 52 | 45 | 55 |
| Heat Resistance(VST)³ | 104 | 113 | 107 | 106 | 88 | 105 |
| Juicing⁴ | X | X | X | X | ○ | X |
| Processability⁵ | ○ | ○ | ○ | △ | ⓞ | △ |
| Appearance⁶ | X | X | X | ○ | X | ○ |

| | | | | | | |
|---|---|---|---|---|---|---|
| Notes) 1: UL94(1/16") was tested according to UL 94 VB | | | | | | |
| 2: Impact strength was tested according to ASTM D256 | | | | | | |
| 3: Heat resistance was tested according to ASTM D306 | | | | | | |
| 4: Juicing was observed with an optical microscope, after the specimens were kept at 80°C for 24 hours (X : juicing was not ovserved, ○: juicing was observed) | | | | | | |
| 5: Processability was observed in terms of the flow of the resin compositions during molding (△: normal, ○: good, ⓞ: very good) | | | | | | |
| 6: Appearance was observed by human eyes. (○: black stripes were occurred, X: black stripes were not occurred). | | | | | | |

## Claims

1. A flameproof thermoplastic resin composition comprising:
(A) a basic resin consisting of (a₁) 70 to 100 % by weight of a thermoplastic, halogen-free polycarbonate (a₂) 30 to 0 % by weight of an ABS consisting of (a₂₁) 30 to 100 % by weight of a g-ABS copolymer with a graft index of 40 to 90 %, which is copolymerized 30 to 70 % by weight of rubber with a glass transition temperature less than 10°C, 30 to 70 % by weight of at least one selected from a group of styrene, α-substitued styrene and nucleus-substitued styrene, and 15 to 30 % by weight of at least one selected from a group of methylmethacrylate, N-substituted maleimide and acrylonitrile, and (a₂₂) 70 to 0 % by weight of a SAN copolymer which is copolymerized 50 to 80 % by weight of at least one selected from a group of sytrene, α-substitued styrene and nucleus-substituted styrene and 50 to 20 % by weight at least one selected from a group of methylmethacrylate, N-substituted maleimide and acrylonitrile;
(B) 6 to 20 parts by weight, per 100 parts by weight of the base resin(A), of a phosphorous compound consisting of 30 to 60 % by weight of triarylphosphates and 70 to 40 % by weight of oligomeric triarylphosphates; and
(C) 0.1 to 2.0 parts by weitht, per 100 parts by weight of the base resin(A), of a fluoric resin.

2. The thermoplastic resin composition defined in claim 1 wherein said triarylphosphates and oligomeric triarylphosphates are represented as the formula(I), thereby the average of n of the phosphorous compound is 0.3 to 0.8, 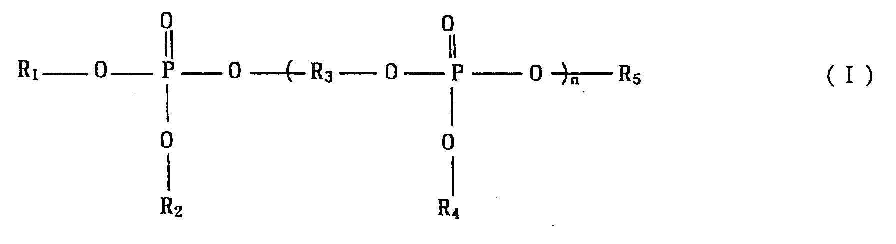 wherein R₁, R₂, R₃, R₄ and R₅ independently of one another are C₆-C₂₀ aryl or alkyl-substituted C₆-C₂₀ aryl, and n is 0 to 5.

3. The thermoplastic resin composition defined in claims 2 wherein said triarylphosphates are at least one selected from a group of triphenylphosphate, tri(2,6-dimenthylphenyl)phosphate and tri(4-methylphenyl)phosphate.

4. The thermoplastic resin composition defined in claim 1 wherein said fluoric resin is at least one selected from a group polytetrafluorocthylene, polyvinylidenefluoride, copolymer of tetrafluoraethylene and vinylidene fluoride, copolymer of tetrafluoroethylene and fluoroalkylvinylether, and copolymer of tetratfulorethlene and hexafluoroprophlene.

5. The thermoplastic resin composition as defined in any preceding claim wherein said resin composition further comprises inorganics, heat stabilizers, oxidation inhibitors, light stabilisers, pigments and/or dyes.

6. A flameproof themoplastic resin composition comprising:
(A) a basic resin consisting of (a₁) 70 to 100 % by weight of a thermoplastic, halogen-free polycarbonate (a₂) 30 to 0 % by weight of an ABS consisting of (a₂₁) 30 to 100 % by weight of a g-ABS copolymer with a graft index of 40 to 90 %, which is copolymerized 30 to 70 % by weight of rubber with a glass transition temperature less than 10°C, 30 to 70 % by weight of at least one selected from a group of styrene, α-substitued styrene and nucleus-substitued styrene, and 15 to 30 % by weight of at least one selected from a group of methylmethacrylate, N-substituted maleimide and acrylonitrile, and (a₂₂) 70 to 0 % by weight of a SAN copolymer which is copolymerized 50 to 80 % by weight of at least one selected from a group of sytrene, α-substitued styrene and nucleus-substituted styrene and 50 to 20 % by weight at least one selected from a group of methylmethacrylate, N-substituted maleimide and acrylonitrile;
(B) 6 to 20 parts by weight, per 100 parts by weight of the base resin(A), of a synthetic oligomeric triarylphosphate representing as the formula(I), in which the average of n of the synthetic oligomeric triarylphosphate is 0.3 to 0.8 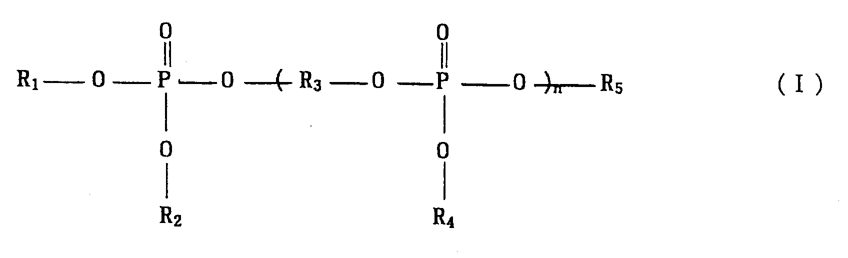 wherein R₁, R₂, R₃, R₄ and R₅ independently of one another are C₆-C₂₀ aryl or alkyl-substituted C₆-C₂₀ aryl.

7. The thermoplastic resin compostion defined in claim 6 wherein said fluoric resin is at least one selected from a group polytetrafluorocthylene, polyvinylidenefluoride, copolymer of tetrafluoraethylene and vinylidene fluoride, copolymer of tetrafluoroethylene and fluoroalkylvinylether, and copolymer of tetratfulorethlene and hexafluoropropylene.

8. The thermoplastic resin composition defined in claim 6 or 7 wherein said resin composition further comprises inorganics, heat stabilizers, oxidation inhibitors, light stabilizers, pigments and/or dyes.
